# EUROPEAN PATENT SPECIFICATION

(11) **EP 2 100 832 B1**
(45) Date of publication and mention of the grant of the patent: **27.04.2011**
(21) Application number: 09153630.0
(22) Date of filing: 25.02.2009
(51) Int. Cl.: B65G 43/08, B65G 47/51, B23P 19/00

(54) **Method of operating a feed device of pieces and feed device, particularly for performing such method**
Verfahren zum Betreiben einer Vorrichtung zum Zuführen von Teilen und Gebührenvorrichtung insbesondere zur Durchführung solch eines Verfahren
Procédé de fonctionnement de dispositif d'alimentation de pièces et dispositif de frais, particulièrement pour effectuer ce procédé

(30) Priority: 11.03.2008 IT BS20080050
(43) Date of publication of application: 16.09.2009
(60) Divisional application: 10172545.5
(73) Proprietor: Automazioni Industriali S.R.L., 25085 Lumezzane S.S. BS (IT)
(72) Inventor: Baglioni, Giuliano, 25085 Lumezzane S.S., Brescia (IT)
(74) Representative: Pulieri, Gianluca Antonio

(56) References cited:
- US-A- 4 557 655
- US-A1- 2004 226 262

## Description

The present invention relates to a method of feeding pieces to a production machine according to the preamble of claim 1, such as a press, a machine tool and similar, to a feed device according to the preamble of claim 2, particularly for executing such method, and to a production system according to the preamble of claim 12.

Usually, a highly automised production line contains a device for feeding the pieces, a pick-up device and a production machine. See, for example, US 4,557,655, which discloses a method of operating a feed device, a feed device and a production system according to the preamble of claims 1, 2 and 12 respectively.

In another example, a conveyor belt feed device is loaded with pieces by an operator; the pieces, transported by the conveyor are taken to a robot; the robot picks up a piece to be processed and puts it in a press, for performance of the scheduled process. On completion of processing, the robot picks up the piece and puts it on another conveyor belt for transport towards further production phases.

The belt advances while it is loaded with pieces by the operator, continuously or discontinuously, depending on the requirements of the production line, this way new pieces to be processed reach the robot at one end of the belt, while another end of the belt, near the operator is freed so as to load more pieces.

Often the operator, for example to perform another task, to go for a break or when finishing a shift leaves the belt belt area and returns only after a period of time, of varying length, during which an extensive loading area of the belt without new pieces to be processed has formed.

When processing of the pieces already loaded on the belt is finished and the belt arrives at the robot without any pieces, production halts until the arrival of a new piece loaded by the operator upon his return.

Generally speaking, once back at the belt the operator is unable to fill the empty part of the belt since this has already passed the safety barrier preventing access, in the vicinity of the robot.

If, however, the loading area is accessible by the operator, in any case the loading operation forces him to adopt a dangerous position.

The purpose of the present invention is to create an operating method of a feed device which overcomes the drawbacks spoken of in relation to the known art.

It is also the purpose of the present invention to create a feed device, particularly for performing the aforesaid operating method. The present invention is embodied by a method of operating a feed device as stated in claim 1; a feed device as stated in claim 2 and a production system comprising such a feed device as stated in claim 12.

Further characteristics and advantages of the operating method and of the feed device will be evident from the description below, made by way of a non-limiting example, according to the attached figures, wherein:

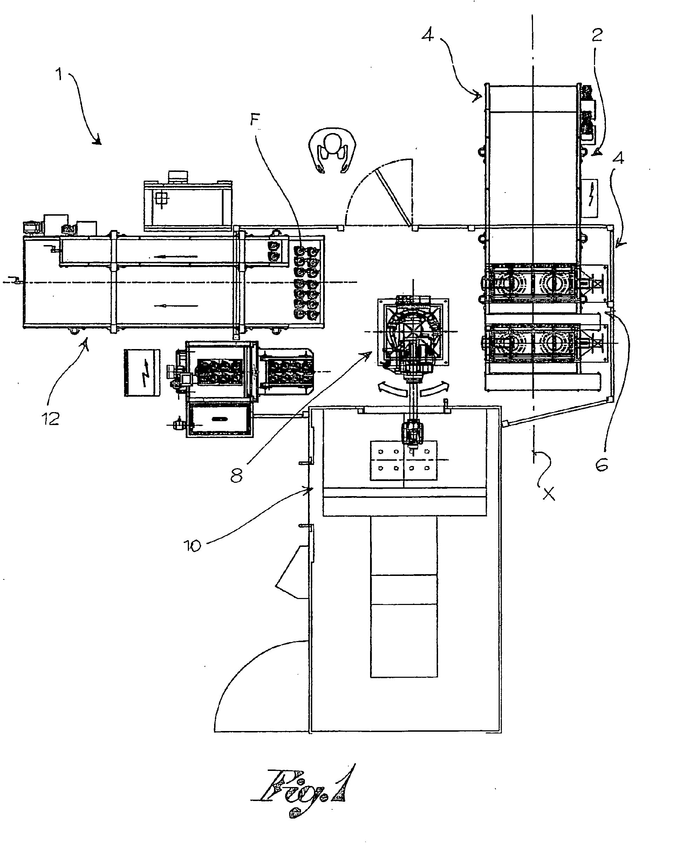

- figure 1 shows an overhead view of a production comprising a feed device of the present invention, according to a preferred embodiment;

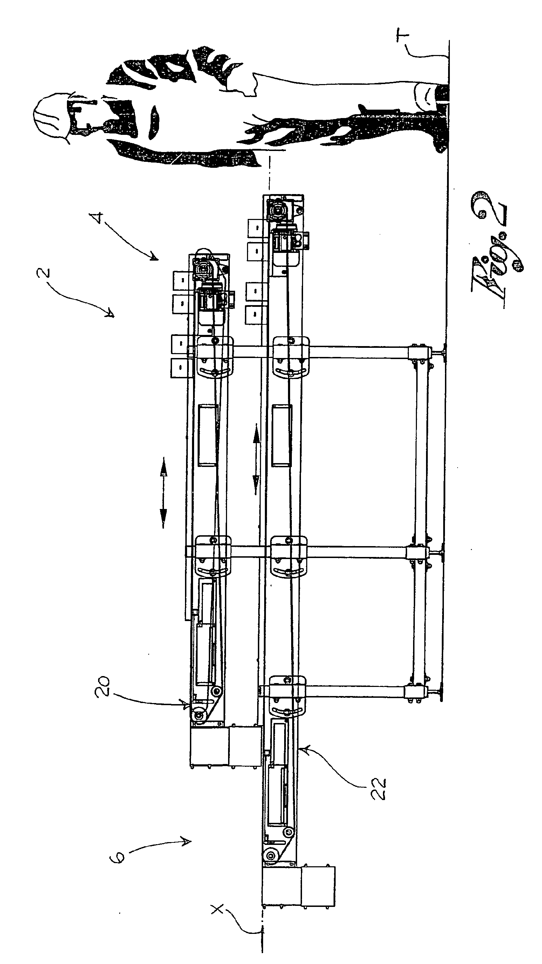

- figure 2 shows a lateral view of the feed device of the system in figure 1.

With reference to the attached figures, reference numeral 1 globally denotes a system for the processing of pieces to be processed and for obtaining processed pieces F.

The system 1 comprises a feed device 2 able to feed pieces to be processed; the feed device 2 is of the belt type, in other words comprising at least one belt for the transport of pieces to be processed placed on it.

Specifically, the feed device has a loading area 4 and a pick-up area 6, distanced along a belt axis X coinciding with the direction of advancement of the pieces on the belt.

Furthermore, the system 1 comprises a pick-up device 8, for instance a robot, and a production machine 10, for instance a press.

The pick-up device 8 is positioned close to the pick-up area 6 of the feed device 2, and is able to pick up the pieces to be processed and offer them to the production machine 10 for processing.

Furthermore, according to a preferred embodiment, the system 1 comprises a transport device 12, for instance a belt, for the transport of the processed pieces towards subsequent production phases.

For instance, when the press has finished processing a piece, the robot picks up the processed piece and puts it on the belt of the transport device 12, to be taken away.

According to a preferred embodiment, the system 1 comprises safety barriers 14 which prevent access of the operator in the vicinity of the robot or of the press.

For instance, the feed device 2 protrudes with its loading area outside the area defined by the safety barriers 14, so that the operator can load the pieces to be processed, while the pick-up area 6 is inside the defined area.

The feed device 2 extends along the belt axis X between the loading area 4 and the pick-up area 6.

Preferably, the feed device 2 comprises a first motorised belt 20, for instance horizontal, and a second motorised belt 22, parallel to the first, which extends from the loading area 4 to the pick-up area 6.

For instance, the first belt is positioned above the second belt, that is it vertically overlays the second belt, but is distanced from it so as to allow the transit of the pieces to be processed between said belts.

The belts 20, 22 of the feed device are motorised so as to advance from the loading area towards the pick-up area and vice versa.

In other words, the belts 20, 22 are motorised so that, upon command, the pieces advance from the loading area towards the pick-up area or move backwards from the pick-up area towards the loading area.

The feed device 2 comprises a belt selection mechanism, which can be operated by the operator and is able to select the belt from which the pick-up device picks up the piece to be processed, choosing from said belts 20, 22.

In other words, the loading belt is the belt from which the robot picks up the pieces to be processed and delivers them to the press. The robot could pick up said pieces from the first belt 20 or from the second belt 22. The belt selection mechanism can be operated by the operator to select the belt 20, 22 from which the robot picks up the piece to be processed.

According to a preferred embodiment, the belt selection mechanism comprises a single belt selection button, operatively connected to a selection control unit.

The selection control unit recognises the loading belt and, in the presence of the signal coming from the belt selection button, designates the loading belt as the passive belt and the passive belt as the new loading belt.

In other words, by pressing the belt selection button, the former passive belt becomes the new loading belt and the former loading belt becomes the new passive belt.

Advantageously, this means that the new loading belt can be designated without error by the operator, in that said operator does not need to make a choice but only to press the belt selection button.

According to a further embodiment variation, the belt selection mechanism comprises a first button associated with the first belt and a second button associated with the second belt; by pressing the first or second button the respective belt is designated as the loading belt. The other belt, that is the belt from which the robot does not pick up the pieces to be processed, is called the passive belt.

Furthermore, the feed device 2 comprises a return mechanism, which can be operated by the operator, able to make the passive belt return, that is advance from the pick-up area towards the loading area.

For instance, the return mechanism comprises a return button, positioned close to the loading area; when the button is pressed, the passive belt starts a return movement.

Furthermore, the feed device 2 comprises powered means of advancement, operatively connected to the motors of the belts 20, 22, which can be operated by the operator and able to make the passive belt advance, in other words move from the loading area towards the pick-up area.

According to a preferred embodiment, said powered means of advancement comprise a pedal, for instance protruding from the floor; when the pedal is pressed by the operator, the passive belt advances.

Furthermore, the feed device 2 comprises means of detection able to detect the presence of pieces to be processed in the pick-up area; specifically, the feed device 2 comprises first means of detection associated with the first belt 20 and second means of detection associated with the second belt 22.

Said means of detection are operatively connected to the motor mechanism of the belts 20, 22, to order advancement of the loading belt when no pieces to be processed are detected in the pick-up area and to order stopping of the belts, (for instance, both the loading belt and the passive belt) when pieces to be processed are detected in the pick-up area.

According to a preferred embodiment, the means of detection are operatively connected to the powered means of advancement, so that if the powered means of advancement are activated (and the operator therefore orders advancement of the passive belt), but the means of detection detects pieces in the pick-up area of the passive belt (which might therefore fall as a result of further advancement), the activation of the powered means of advancement is ignored.

According to a preferred embodiment, moreover, the feed device 2 comprises means of visualisation able to acquire the image of the piece to be processed in the pick-up area.

Said means of visualisation are operatively connected to the pick-up device to control its configuration, trajectory and movement so as to efficiently pick up the piece to be processed.

According to a preferred embodiment, the feed device 2 comprises an automatic designation device, operatively connected to the belt selection mechanism, able to detect the presence of at least one piece on the loading belt and able to interact with the belt selection mechanism to automatically designate the passive belt as the new loading belt should the loading belt not have any more pieces to be processed on it.

To better illustrate the method of operation according to the present invention, we will assume that the designated loading belt is the first belt 20 and that the second belt 22 is therefore the passive belt.

Preparatively, the passive belt, that is the second belt 22, is full of pieces to be processed in the pick-up area. The second means of detection detect the pieces to be processed in the pick-up area of the second belt 22 and order it to stop.

Normally, the operator loads the first belt 20; when the piece to be processed has been picked up, the first means of detection detects the absence of pieces to be processed in the pick-up area 6 of the first belt and orders its advancement.

In the loading area 4 of the first belt 20 an empty area therefore forms, where the operator puts a further piece to be processed.

Assuming that the operator is absent for a period of time, for instance to perform another task, to go for a break or when finishing a shift, while production continues and the first belt 20 advances, a progressively larger empty area forms in the loading area.

When the operator returns to the feed device, he activates the belt selection mechanism (preferably by pressing the single belt selection button), selecting the second belt 22 as the loading belt: the pick-up device 8 will therefore pick up the next piece to be processed from the second belt 22 and no longer from the first belt 20.

The operator then activates the return mechanism, for instance by pressing the return button, causing the backward movement of the first belt 20, until the empty area is sufficiently reduced.

At this point, the return button is released causing the passive belt, that is the first belt 20 to stop.

The operator recommences loading of the passive belt, that is the first belt 20, which tends to progressively advance, at the operator's command, by activation of the powered means of advancement (preferably by pressing the pedal) until the first means of detection detect pieces to be processed in the pick-up area.

In the meantime, the pick-up device 8 has continued to pick up pieces to be processed from the loading belt 22, without halting production.

According to further embodiment variations, the first belt 20 and the second belt 22 are alongside and close to each other, for instance at the same height; according to a further embodiment, the first belt 20 is alongside but distanced from the second belt, so that the operator can stand between them.

In the case in which the operator is absent for such a long time that all the pieces present on the loading belt are finished, the automatic designation device detects the absence of pieces on the loading belt' and interacts with the belt selection mechanism so that automatically, that is without intervention of the operator, the passive belt is designated as the new loading belt and the loading belt as the new passive belt.

Advantageously, the passive belt therefore also acts as a reserve, or depot of pieces to be processed.

Innovatively, the method of operating a feed device of pieces and said feed device of pieces, overcome the problem of production interruptions caused by lack of pieces on the feed belts.

Advantageously, moreover, the invention prevents the operator from having to adopt dangerous positions, for instance trying to fill the empty area of the conveyor belt and passing the safety barriers.

According to a further advantageous aspect, the invention permits a considerable lengthening of the period of autonomy of the production line.

According to yet a further advantageous aspect, the invention permits management of production lines with high or low pieces to be processed, in relation to their tendency to fall over as a result of movement of the belt.

Advantageously, moreover, the selection mechanisms prevent errors when choosing the loading belt, by being respectively associated to the belt selected as loading belt.

It is clear that a person skilled in the art may make modifications to the method and device according to the present invention, so as to satisfy contingent and specific requirements while remaining within the scope of protection as defined by the appended claims.

## Claims

1. Method of operating a feed device (2) of pieces (F), comprising, in succession, the phases of:
- feeding the pieces (F) to be processed to a pick-up device (8) by means of a first belt (20); **characterized in that** it comprises the phases of :
- detecting an empty area without any pieces on said first belt;
- manually selecting a second belt (22);
- feeding the pieces (F) to be processed to said pick-up device (B) solely by means of said second belt;
- making the first belt (20) move backwards to reduce the empty area;
- loading the pieces (F) to be processed on the first belt (20), in the reduced empty area.

2. Feed device (2) of pieces (F), comprising :
- a first motorised belt (20) to feed the pieces;
- a second motorised belt (22) to feed the pieces; **characterized in that** it further comprises :
- a belt selection mechanism able to manually select, from said first (20) and second belt (22), a loading belt, the other belt being defined a passive belt;
- a return mechanism able to make said passive belt move backwards to reduce the empty area without any pieces (F) to be processed.

3. Feed device according to claim 2, wherein said first belt (20) vertically overlays the second belt (22).

4. Feed device according to claim 2, wherein said first belt (20) is alongside the second belt (22) and distanced from it to accommodate an operator between them.

5. Feed device according to claim 4, wherein said first (20) and second (22) belt are close to each other.

6. Feed device according to any of the claims from 2 to 5, comprising means of detection for the detect of pieces (F) to be processed in the pick-up area (6) of said belts (20,22).

7. Feed device according to any of the claims from 2 to 6, wherein said belt selection mechanism comprises a single button operatively connected to a control unit for the selection of the loading belt only.

8. Feed device according to any of claims from 2 to 7, wherein said return mechanism comprises a button.

9. Feed device according to any of claims from 2 to 8, comprising powered means of advancement able to be manually activated to order advancement of the passive belt.

10. Feed device according to any of the claims from 2 to 9, comprising an automatic designation device able to detect the absence of pieces (F) on the loading belt and to automatically designate a new loading belt.

11. Feed device according to any of the claims from 2 to 10, comprising means of visualisation able to acquire the image of the of the piece (F) to be processed.

12. Production system (1) comprising:
- a feed device (2);
- a pick-up device (8), for instance a robot;
- a production machine (10), for instance a press, **characterized in that** the feed device (2) is according to any of the claims from 2 to 11.

## Patentansprüche

1. Verfahren zum Betreiben einer Beschickungsvorrichtung (2) für Bauteile (F), nacheinander die folgenden Schritte umfassend
- Zuführen der zu verarbeitenden Bauteile (F) an eine Aufnehmevorrichtung (8) mittels eines ersten Förderbands (20),
**dadurch gekennzeichnet, dass** es die folgenden Schritte umfasst:
- Erfassen eines leeren Bereiches ohne Bauteile auf dem ersten Förderband;
- manuelles Auswählen eines zweiten Förderbands (22),
- Zuführen der zu verarbeitenden Bauteile (F) an die Aufnehmevorrichtung (8) ausschließlich mittels des zweiten Förderbands;
- Veranlassen eines Rückwärtsbewegens des ersten Förderbands (20), um den leeren Bereich zu verringern;
- Laden der zu verarbeitenden Bauteile (F) auf das erste Förderband (20) in dem verringerten leeren Bereich.

2. Beschickungsvorrichtung (2) für Bauteile (F) umfassend
- ein erstes motorisiertes Förderband (20) zum Zuführen der Bauteile,
- ein zweites motorisiertes Förderband (22) zum Zuführen der Bauteile,
**dadurch gekennzeichnet, dass** es ferner
- einen Bandauswahlmechanismus, der im Stande ist, ein Ladeband aus dem ersten (20) und dem zweiten Förderband (22) manuell auszuwählen, wobei das andere Förderband als ein passives Förderband definiert wird;
- einen Rückstellmechanismus, der geeignet ist, das passive Förderband zur Rückwärtsbewegung zu veranlassen, um den leeren Bereich, der keine zu verarbeitenden Bauteile (F) aufweist, zu verringern, umfasst.

3. Beschickungsvorrichtung gemäß Anspruch 2, wobei das erste Förderband (20) vertikal das zweite Förderband (22) überdeckt.

4. Beschickungsvorrichtung gemäß Anspruch 2, wobei das erste Förderband (20) parallel zu dem zweiten Förderband (22) und beabstandet zu diesem angeordnet ist, um eine Bedienungsperson zwischen diesen aufzunehmen.

5. Beschickungsvorrichtung gemäß Anspruch 4, wobei das erste Förderband (20) und das zweite Förderband (22) nah zueinander angeordnet sind.

6. Beschickungsvorrichtung gemäß irgend einem der Ansprüche 2 bis 5, umfas-send Erfassungsmittel zum Erfassen der in dem Aufnahmebereich (6) der Bänder (20, 22) zu verarbeitenden Bauteile (F).

7. Beschickungsvorrichtung gemäß irgend einem der Ansprüche 2 bis 6, wobei der Bandauswahlmechanismus einen einzigen Knopf umfasst, der mit einer Steuereinheit nur für die Auswahl des Ladebands betriebsmäßig verbunden ist.

8. Beschickungsvorrichtung gemäß irgend einem der Ansprüche 2 bis 7, wobei der Rückstellmechanismus einen Knopf umfasst.

9. Beschickungsvorrichtung gemäß irgend einem der Ansprüche 2 bis 8 , umfas-send angetriebene Bewegungsmittel, die manuell aktiviert werden können, um ein Bewegen des passiven Bands zu veranlassen.

10. Beschickungsvorrichtung gemäß irgend einem der Ansprüche 2 bis 9, umfassend eine automatische Bestimmungsvorrichtung, die die Abwesenheit von Bauteilen (F) auf dem Ladeband erkennt und ein neues Ladeband automatisch festlegt.

11. Beschickungsvorrichtung gemäß irgend einem der Ansprüche 2 bis 10, umfassend Visualisierungsmittel, die das Bild des zu verarbeitenden Teiles (Stücks) (F) aufnehmen.

12. Produktionssystem (1) umfassend
- eine Beschickungsvorrichtung (2),
- eine Aufnehmevorrichtung (8), beispielsweise einen Robotor,
- eine Produktionsmaschine (10), beispielsweise eine Presse, **dadurch gekennzeichnet, dass die** Beschickungsvorrichtung (2) eine Vorrichtung gemäß irgend einem der Ansprüche 2 bis 11 ist.

## Revendications

1. Méthode de fonctionnement d'un dispositif d'alimentation (2) de pièces (F), comprenant, en succession, les phases consistant à :
□ alimenter les pièces (F) à traiter dans un dispositif de ramassage (8) au moyen d'un premier tapis roulant (20) ; **caractérisé en ce qu'**il comprend les phases consistant à :
□ détecter une zone vide sans pièce sur ledit premier tapis roulant ;
□ sélectionner manuellement un second tapis rou-lant (22) ;
□ alimenter les pièces (F) à traiter dans ledit dispositif de ramassage (8) uniquement au moyen dudit second tapis roulant ;
□ amener le premier tapis roulant (20) à se dépla-cer vers l'arrière pour réduire la zone vide ;
□ charger les pièces (F) à traiter sur le premier tapis roulant (20), dans la zone vide réduite.

2. Dispositif d'alimentation (2) de pièces (F), comprenant :
□ un premier tapis roulant motorisé (20) pour alimenter les pièces ;
□ un second tapis roulant motorisé (22) pour alimenter les pièces ; **caractérisé en ce qu'**il comprend en outre :
□ un mécanisme de sélection de tapis roulant apte à sélectionner manuellement, parmi le premier tapis roulant (20) et le second tapis roulant (22), un tapis roulant de chargement, l'autre tapis roulant étant défini comme tapis roulant passif ;
□ un mécanisme de retour apte à amener ledit tapis roulant passif à se déplacer vers l'arrière pour réduire la zone vide sans pièce (F) à traiter.

3. Dispositif d'alimentation selon la revendica-tion 2, dans lequel ledit premier tapis roulant (20) se trouve verticalement au-dessus du second tapis roulant (22).

4. Dispositif d'alimentation selon la revendica-tion 2, dans lequel ledit premier tapis roulant (20) se trouve à côté du second tapis roulant (22) et à une distance de celui-ci permettant à un opérateur de se mettre entre eux.

5. Dispositif d'alimentation selon la revendica-tion 4, dans lequel ledit premier tapis roulant (20) et ledit second tapis roulant (22) sont proches l'un de l'autre.

6. Dispositif d'alimentation selon l'une quelconque des revendications 2 à 5, comprenant un moyen de détection pour la détection de pièces (F) à traiter dans la zone de ramassage (6) desdits tapis roulants (20, 22).

7. Dispositif d'alimentation selon l'une quelconque des revendications 2 à 6, dans lequel ledit mécanisme de sélection de tapis roulant comprend un bouton unique relié de manière opérationnelle à une unité de commande pour la sélection du tapis roulant de chargement uniquement.

8. Dispositif d'alimentation selon l'une quelconque des revendications 2 à 7, dans lequel ledit méca-nisme de retour comprend un bouton.

9. Dispositif d'alimentation selon l'une quelconque des revendications 2 à 8, comprenant un moyen motorisé d'avancement apte à être manuellement activé pour commander l'avancement du tapis roulant passif.

10. Dispositif d'alimentation selon l'une quelconque des revendications 2 à 9, comprenant un disposi-tif de désignation automatique apte à détecter l'absence de pièces (F) sur le tapis roulant de chargement et à désigner automatiquement un nouveau tapis roulant de chargement.

11. Dispositif d'alimentation selon l'une quelconque des revendications 2 à 10, comprenant un moyen de visualisation apte à acquérir l'image de la pièce (F) à traiter.

12. Système de production (1) comprenant :
□ un dispositif d'alimentation (2) ;
□ un dispositif de ramassage (8), par exemple un robot;
□ une machine de production (10), par exemple une presse, **caractérisé en ce que** le dispo-sitif d'alimentation (2) est selon l'une quelconque des revendications 2 à 11.
